# EUROPEAN PATENT APPLICATION

(11) **EP 0 774 330 A1**
(43) Date of publication of application: **21.05.1997**
(21) Application number: 96118344.9
(22) Date of filing: 15.11.1996
(51) Int. Cl.: B27K 3/00, A62D 3/00

(54) **Process to recover poles or other elements of impregnated wood and the respective impregnation substances in solution form, and to regenerate said solution**

(30) Priority: 15.11.1995 IT MI952340
(71) Applicant: Stella S.p.A., 12100 Cuneo (IT)
(72) Inventor: Gasco, Franco, 12100 Cuneo (IT)
(74) Representative: Faggioni, Marco, Dr. Ing.

(57) **Abstract**

A process to recover poles or other elements of impregnated wood and the respective impregnated preservative substances in solution form, and to subsequently regenerate said solution, comprises the steps of:
- chipping the impregnated wood into chips;
- extracting the impregnated preservative substances from the wooden chips by means of a leaching solution;
- concentrating the solution containing said preservative substances obtained in the previous extraction step, with recovery of leaching solution; and
- regenerating the concentrated solution of preservative substances, for its reuse as a fresh impregnating solution.

The process also allows to reuse the wooden chips, for instance in the building industry or in carpentry.

## Description

The present invention concerns a process to recover poles or other elements of impregnated wood and the respective impregnation substances in solution form, and to regenerate the solutions containing said substances. The invention particularly concerns a process allowing to fully reuse both the wood and the impregnation substances.

The wooden poles, used for example to support electric or telephone lines, after construction and before use, are normally treated with solutions of preservative substances, allowing to lengthen their life and increase their resistance to atmospheric agents, to fungi and to animal parasites. A type of impregnating solution, frequently used for this purpose, contains for example chromium (VI), copper (II) and arsenic (V) salts. Chromium (VI), during impregnation, is reduced to chromium (III) by combining with lignin and thereby allowing also the other salts to cling to the wood, said salts having anticryptogamic and antiparasitic functions. Other types of impregnating solutions contain mixtures based on copper, ammonium and quaternary amines (ACQ), or else on copper, borum (CXS), creosote. In the past, once the time of use had come to an end, the poles were generally sold again and used for the most different purposes (for instance, in the building industry), before being destroyed in one way or the other.

Nevertheless, wood impregnated with some of the aforecited preservative substances is included in the category of harmful wastes, so that its disposal in waste dumps involves very high costs.

Furthermore, once it has been disposed of, the wood can no longer be used in any way, whereas - if deprived of the impregnation substances, and thus no longer classifiable as a harmful waste - it could form an interesting secondary resource.

The object of the present invention is to thus realize a process of recovery and regeneration, allowing to reuse both the impregnation substances and the wood, without creating any pollution in the environment.

Said object is fully reached with a process to recover poles or other elements of impregnated wood and the respective impregnated preservative substances in solution form, and to subsequently regenerate said solution, characterized in that it comprises the steps of:
- chipping the impregnated wood into chips;
- extracting the impregnated preservative substances from the wooden chips by means of a leaching solution;
- concentrating the solution containing said preservative substances obtained in the previous extraction step, with recovery of leaching solution; and
- regenerating the concentrated solution of preservative substances, for its reuse as a fresh impregnating solution.

According to a preferred embodiment of the invention, said impregnation substances comprise a mixture of chromium (III), copper (II) and arsenic (V) salts, said leaching solution is an acid solution, and said regeneration step includes an oxidation reaction apt to convert the chromium (III) into chromium (VI).

According to a characteristic of the invention, the extraction step is followed by a washing step of the wooden chips with fresh water, so as to reduce the content of impregnating substances to levels which are compatible with the successive reuse of the wood. All the washing liquid is used in the extraction step. Preferably, said extraction and washing steps are carried out in countercurrent with the wooden chips.

Suitably, the leaching solution used in the extraction step has a low boiling point and forms no volatile compounds with the impregnating substances being extracted. Preferably, the regeneration process is such that the substances left over in the final solution, after any possible reactions of conversion, may be compatible with the reuse of the same solution for wood impregnation. Said regeneration process may be carried out with both chemical and electrochemical reactions.

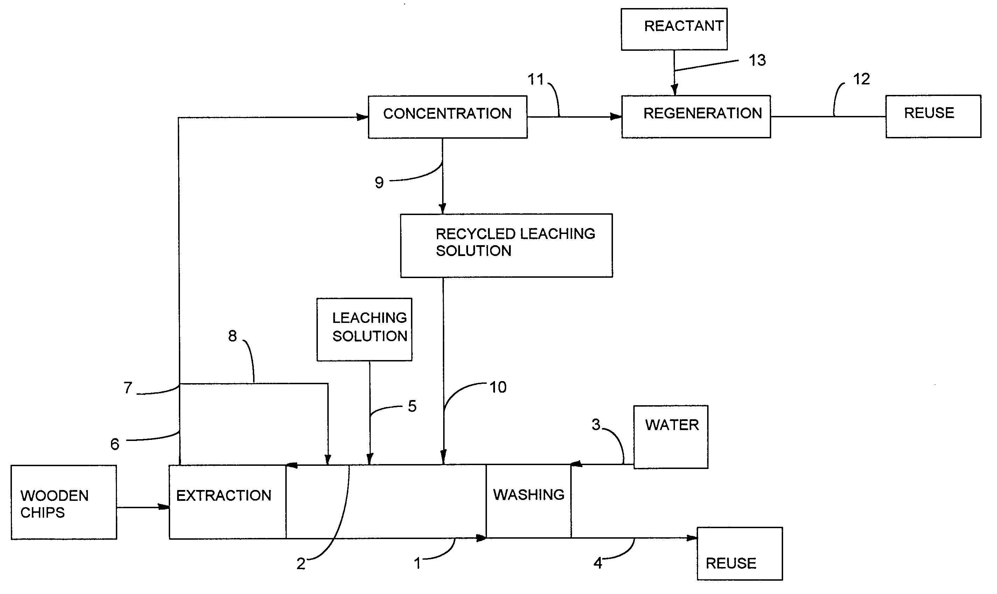

The invention is now described in further detail, with reference to the accompanying drawing, which represents a block diagram illustrating a preferred embodiment of the process according to the present invention.

In the following description, reference will be made to a specific case, wherein the wood to be treated has been impregnated with chromium (VI), copper (II) and arsenic (V) salts, and the leaching solution used is an acid solution; it is evident, however, that the invention should not be limited to such an application, since both the number and type of preservative substances, and the particular leaching solution used to extract the same, can vary within very wide ranges, without thereby departing from the protection scope of the invention itself.

The impregnated wooden chips are obtained by grinding or chipping in known manner the wooden poles. In general, the poles having to be discarded are gathered and cut into pieces. Subsequently, any iron elements are removed from the pieces, as - during the successive steps - iron would interfere with the cations of the metals of the impregnation salts and would lead to a regenerated solution which is thereby contaminated and thus not apt to be reused. Iron removal is generally carried out in two steps. The first step involves the manual removal from the pole pieces of larger iron elements, for instance indicator plates, screws and the like; such pieces are then reduced into shavings or chips. The second step involves the removal from said chips, by magnetic means, of any iron residues of small dimensions and of any filings which may be present.

The wooden chips, free from iron but still impregnated with metal ions, are thus fed to the extraction step. This step is carried out, in countercurrent, with a leaching solution: for instance an acid solution with controlled pH, which dissolves the ions containing chrome (III), copper (II) and arsenic (V), and thereby reduces the content thereof in the wooden chips as the latter approach the outlet of the extraction device. By suitably adjusting the flow rate of the acid leaching solution - the global feeding of which is shown in the block diagram by line 2 - and the speed of the wooden chips moving forward into the extraction device, one may obtain that, in line 1, the content of impregnation substances still present in the chips be reduced to that of the solution with which said chips remain imbued; obviously, the imbibition of wood cannot be prevented whereby, at the outlet 1 from the extraction device, this fraction of acid and solution of heavy metal ions is inevitable.

To fully extract from the wood even this residual fraction, the chips are sent, through line 1, to a countercurrent washing step with fresh water, fed through line 3. Also in this case, it is indispensable to precisely adjust the water flow rate and the speed of the chips moving forward in the washing device, so as to obtain, at the outlet 4 thereof, the almost total removal from said chips both of the leaching solution and of the impregnation substances. The wooden chips, simply imbued with water and thus freed from any harmful substances, can at this stage be used again for the most different purposes.

This process allows to fully exploit the wood of the discarded poles, with a consequent double saving. In fact, on one hand, it is no longer necessary to provide for the costly disposal of the impregnated wood in waste dumps, in that said requirement no longer exists, and on the other hand, the regenerated wood can be used again, for instance in the construction of wood and concrete elements for use in the building industry, or else in the production of chipboard panels for carpentry, or the like.

The fresh leaching solution is sent into the feeding line 2 through a line 5 converging therein. After the extraction step, the leaching solution, rich of extracted substances flowing into line 6, consists of an acid leaching solution with a high concentration of metal ions of the impregnation substances. The flow 6 is choked in 7, and a significant part of said flow is recycled, through line 8, into the line 2 feeding the leaching solution, so as to be able to adjust the liquid/solid proportion in the extraction device to the required extent, and simultaneously obtain homogeneous processing conditions in said device. The remaining part of the flow 6 is fed into a device where the solution is concentrated, recovering at the same time the fraction of acid leaching solution still contained therein.

For this step to be effective the choice of the acid leaching solution is particularly critical. Said solution should in fact first of all possess good properties of solubilization of the impregnation substances containing chrome (III), copper (II) and arsenic (V) ions, so as to obtain a complete extraction thereof. A second important requirement is that said solution should not determine, when reacting with one of said substances, compounds preventing its separation in the concentration step (thermal and/or physical) to avoid the partial removal of the leaching solution, thereby undesirably reducing the productivity of the process.

Finally, said solution should allow to obtain a full and rapid separation from the impregnation substances, thereby increasing even further the productivity of the process.

Thus, a practically pure solution, i.e. containing no impregnation substances, flows out into line 9 after the concentration step. Said solution is totally recycled, through line 10, into the line 2 feeding the acid leaching solution for the extraction step.

Summing up, the solution used for extraction, fed through line 2, is formed by: a fresh acid leaching solution fed from line 5; the recycle of part of the solution flowing into line 6 after the extraction step and fed from line 8; the solution flowing into line 9 after the concentration step and fed from line 10; and, finally, the solution obtained by washing in countercurrent the wooden chips with pure water, to remove the last traces of the acid leaching solution and of the metal ions.

A concentrated solution, containing chrome (III), copper (II) and arsenic (V) ions, flows into line 11 from the concentration device. Such as it is, said solution cannot be reused for impregnating new poles, in that chrome (III) is not apt to react with lignin and should thus be previously converted again into chrome (VI). For this purpose, the invention provides for a processing step to regenerate said solution, by adding suitable reactants or additives through line 13. In the particular case described herein, the regeneration is obtained by adding to the solution an oxidation reactant, chosen in such a manner as to allow using again directly the oxidized solution for the next wood impregnation. A suitable reactant could be persulfuric acid which, in the oxidation reaction, is converted into sulfate, a compound being fully compatible with the subsequent reuse of the oxidating solution as an impregnation solution; as an alternative, the oxidation could be obtained by electrochemical means.

By oxidating the solution of ions, extracted and concentrated, a further object of the invention is reached, namely to eliminate from the process the even slightest amount of waste material. Said solution, flowing out through line 12, can in fact be fully used again for impregnating new wooden elements, hence obtaining an additional interesting economical advantage. As can be easily understood from the previous description, and from the block diagram referring to the same, the process according to the present invention makes it possible to reuse in full both the wood and the impregnation substances, without the slightest uncontrolled emission of polluting substances, in that no type of exhausts are foreseen.

It is anyhow understood that the invention is not limited to the particular embodiment described heretofore, which merely represents a non-limiting example of its scope, but that a number of variants can be introduced, all within reach of an expert of the art - particularly to adapt the process to different types of impregnation substances and to different leaching solutions - without thereby departing from the scope of the present invention, such as defined in the following claims.

## Claims

1. Process to recover poles or other elements of impregnated wood, and the respective impregnated preservative substances in solution form, and to subsequently regenerate said solution, characterized in that it comprises the steps of:
- chipping the impregnated wood into chips;
- extracting the impregnated preservative substances from the wooden chips by means of a leaching solution;
- concentrating the solution containing said preservative substances obtained in the previous extraction step, with recovery of leaching solution; and
- regenerating the concentrated solution of preservative substances, for its reuse as a fresh impregnating solution.

2. Process as in claim 1), comprising moreover the steps of:
- washing with water the wooden chips from which the impregnating preservative substances have already been extracted; and
- sending the water used for washing the wooden chips to the extraction step.

3. Process as in claim 1) or 2), characterized in that said wood chipping step includes:
- cutting the poles into pieces of reduced size;
- removing from said pieces any large iron elements;
- chipping said pieces to obtain impregnated wooden chips; and
- removing by magnetic means any iron residues from said chips.

4. Process as in claim 1), 2) or 3), wherein said extraction step and said washing step are carried out in countercurrent with the wooden chips.

5. Process as in any one of the previous claims, wherein said concentration step is carried out by a thermal treatment of the leaching solution, rich of extracted preservative substances.

6. Process as in any one of the previous claims, wherein the leaching solution used in said extraction step forms no volatile compounds with said preservative substances.

7. Process as in any one of the previous claims, characterized in that the leaching solution separated in the concentration step is recycled to the extraction step.

8. Process as in any one of the previous claims, wherein said impregnating preservative substances comprise a mixture of chromium (III), copper (II) and arsenic (V) salts.

9. Process as in claim 8), wherein said leaching solution is an acid solution.

10. Process as in claim 8), wherein said regeneration step includes an oxidation reaction apt to convert the chromium (III) into chromium (VI).

11. Process as in claim 10) wherein, for said oxidation reaction, use is made of an oxidant chosen among those giving rise to reaction products compatible with the recycle of the solution obtained for the impregnation of new wooden elements.

12. Process as in claim 10) wherein, for said oxidation reaction, use is made of persulfuric acid, or of an electrochemical system.
